# EUROPEAN PATENT SPECIFICATION

(11) **EP 3 802 070 B1**
(45) Date of publication and mention of the grant of the patent: **26.01.2022**
(21) Application number: 19733141.6
(22) Date of filing: 27.05.2019
(51) Int. Cl.: B29C 65/18, B29C 65/30, B29C 65/74, B29C 65/78, B65B 7/16, B65B 11/52, B65B 51/14, B65B 59/04

(54) **MOULD FOR A HEAT-SEALING MACHINE**
FORM FÜR EINE HEISSSCHWEISSMASCHINE
MOULE DE MACHINE DE THERMOSCELLAGE

(30) Priority: 29.05.2018 IT 201800005808
(43) Date of publication of application: 14.04.2021
(73) Proprietor: Caveco S.r.l., 25036 Palazzolo Sull'Oglio (BS) (IT)
(72) Inventor: VELLUTINI, Franco, 25038 Rovato (Brescia) (IT)
(74) Representative: Concone, Emanuele
(86) International application number: PCT/IB2019/054369
(87) International publication number: WO 2019/229623

(56) References cited:
- US-A1- 2006 048 480

## Description

The present invention relates to the technical field of heat-sealing food containers and trays, and in particular a mould for a heat-sealing machine for food containers and a related heat-sealing machine.

Machines are currently known for heat-sealing food containers, wherein a tray is interposed between two facing moulds and a protective film is passed over it.

The two moulds are abutted against each other and define a sealed chamber from which the air can optionally be removed and replaced with a controlled atmosphere.

Specifically, depending on the food in the container, some machines allow the user to choose whether to keep the ambient air inside, to extract the air completely and package the product under vacuum, so that the film adheres to the product creating a "skin" effect, or to subsequently re-inject special gases into the container to create a controlled atmosphere aimed at protecting the original organoleptic and nutritional characteristics of the product along with its aesthetic appearance.

The sealing or heat-sealing of containers is carried out by heating the film by means of a resistance arranged along the edge of the tray so as to obtain a partial melt to be sealably adhered to the edge.

Simultaneously with or subsequently to these steps, the excess protective film can be cut off along the edge of the tray.

This type of machine is widely used for the packaging of fresh products often carried out by small commercial companies. In this context of use, wherein the products and containers can be highly variable in size and shape, the small production volumes do not allow the adoption of multiple machines which are each specialized in the packaging of a different size and shape, and for this reason the possibility of quickly adapting a single machine to the shape and size of a container is considered as very important.

For this reason, machines have been developed featuring a modular design of the moulds, wherein the individual moulds are interchangeable and configured to heat-seal containers with different sizes and shapes.

In this type of machine, the individual moulds must be integrally connected to special seats arranged on the machine so that the latter can move them reciprocally according to the steps described above.

The moulds and the machine have respective mutually abutting contact portions to move the movable members of the moulds during the processing of the food containers. An example of such a machine is disclosed in US 2006/048480A1.

Disadvantageously, in order to be able to remove the modular moulds from the machine, the operator must first lock its movable parts, which is costly in terms of downtime.

An example of such locking systems involves the use of horizontal rods positioned above the movable portions, which can be constrained to the latter to lock them in a position that allows the removal of the mould.

In this context, the technical task underlying the present invention is to provide a mould for a heat-sealing machine for food containers and a related heat-sealing machine, which overcome at least some of the above-mentioned drawbacks of the prior art.

In particular, it is an object of the present invention to provide a mould for a heat-sealing machine for food containers and a related heat-sealing machine, which can speed up the mould exchange operation, making it more efficient.

The specified technical task and objects are substantially achieved by means of a mould for a heat-sealing machine for food containers and a related heat-sealing machine comprising the technical features set forth in one or more of the accompanying claims. The dependent claims correspond to different possible embodiments of the invention.

Further features and advantages of the present invention will become more apparent from the indicative, and therefore non-limiting description of a preferred, but not exclusive, embodiment of a mould for a heat-sealing machine for food containers and a related heat-sealing machine.

This description will be set forth hereinafter with reference to the accompanying drawings, which are provided for illustration purposes only, therefore not for limiting purposes, wherein:
- Figure 1 is a front view of a heat-sealing machine for food containers according to the present invention;

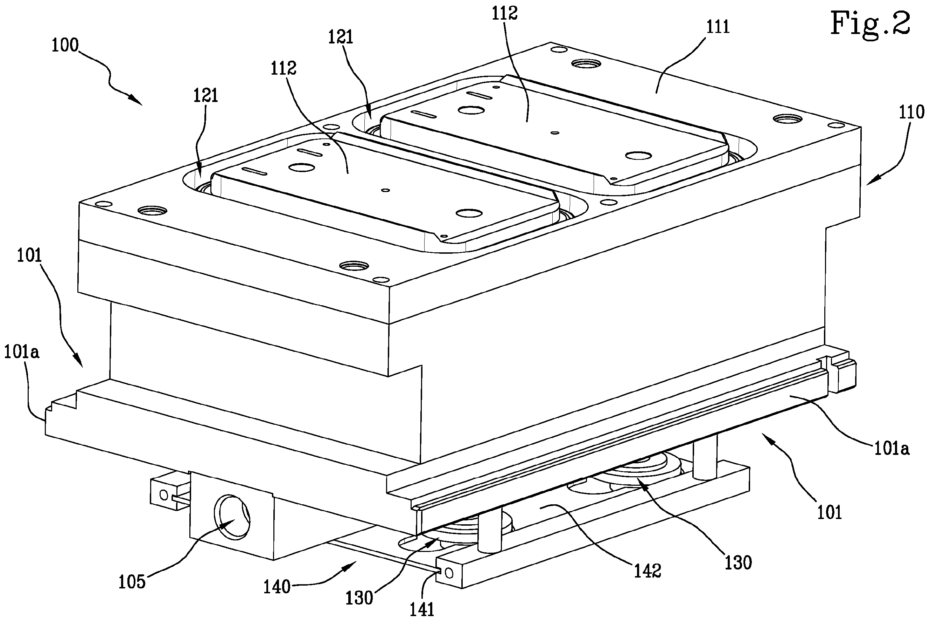

- Figure 2 is a perspective view of a mould in accordance with the present invention;

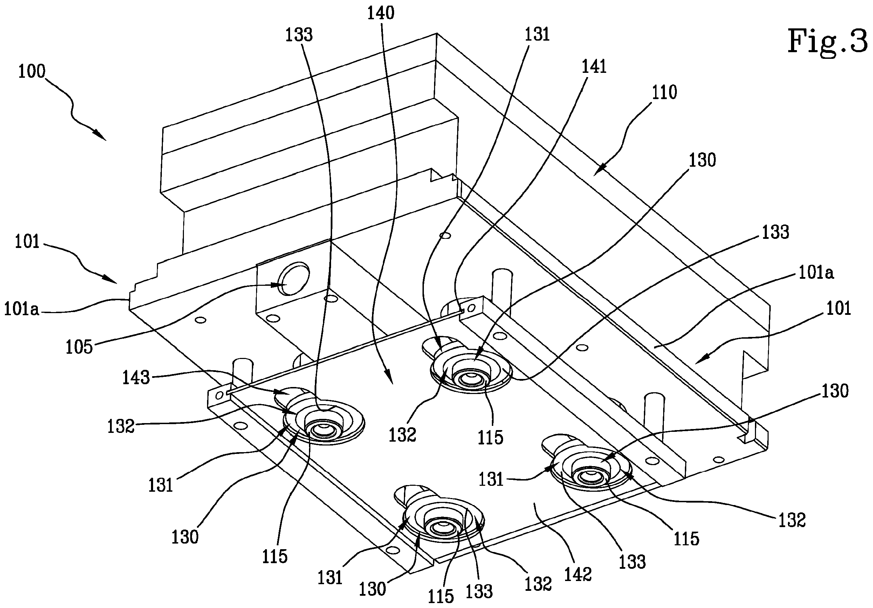

- Figure 3 is a perspective view of the mould in Figure 2 from a different angle;

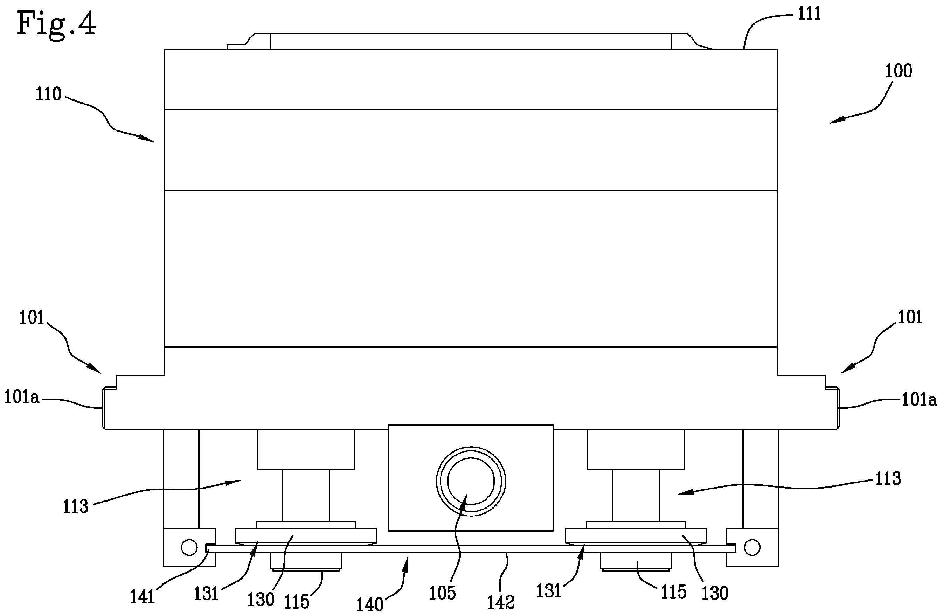

- Figure 4 is a rear view of the mould in Figure 2;

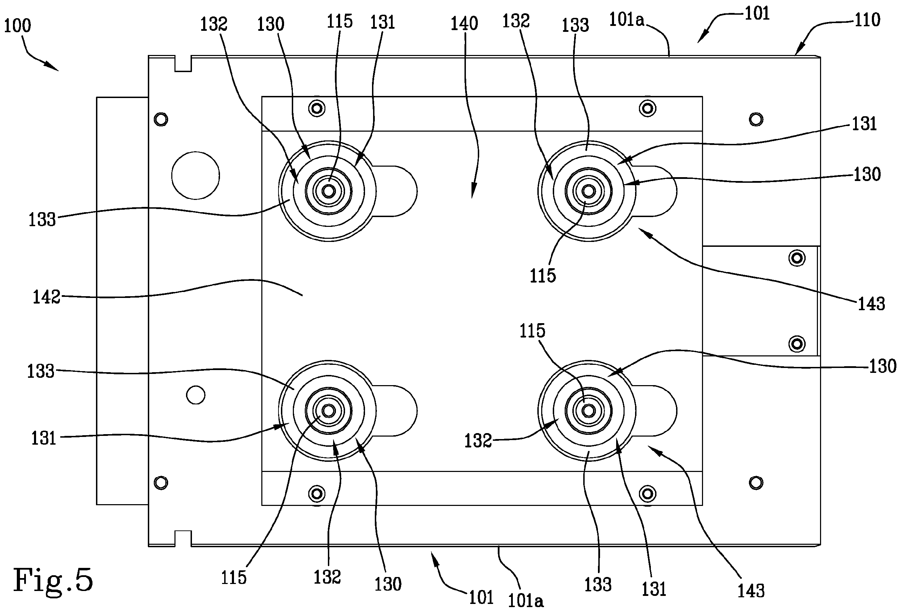

- Figure 5 is a bottom view of the mould in Figure 2;

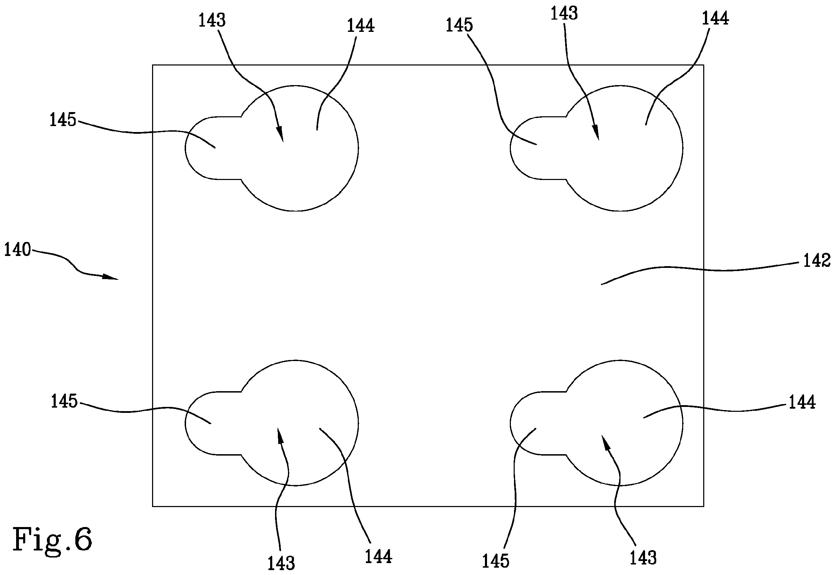

- Figure 6 shows an embodiment detail of the mould in Figure 2;

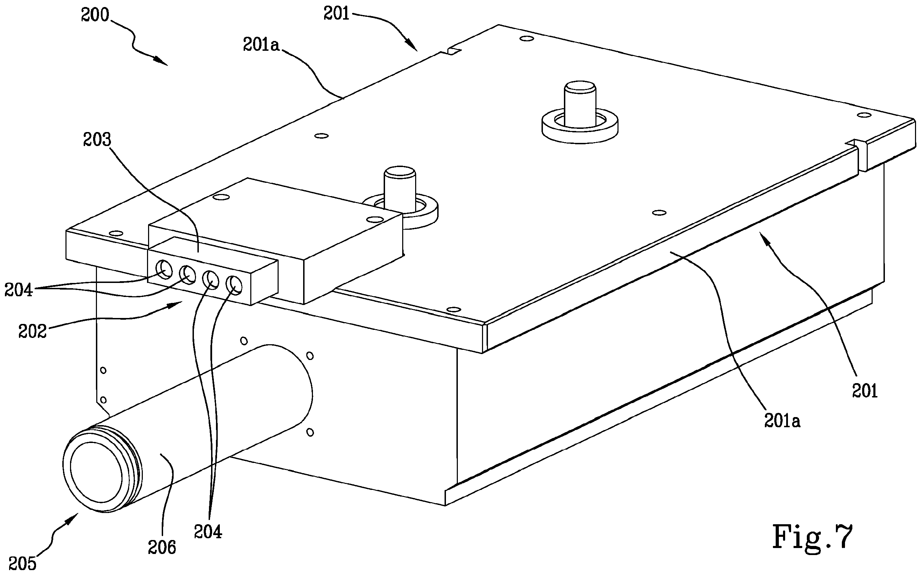

- Figure 7 is a perspective view of a different mould in accordance with the present invention;

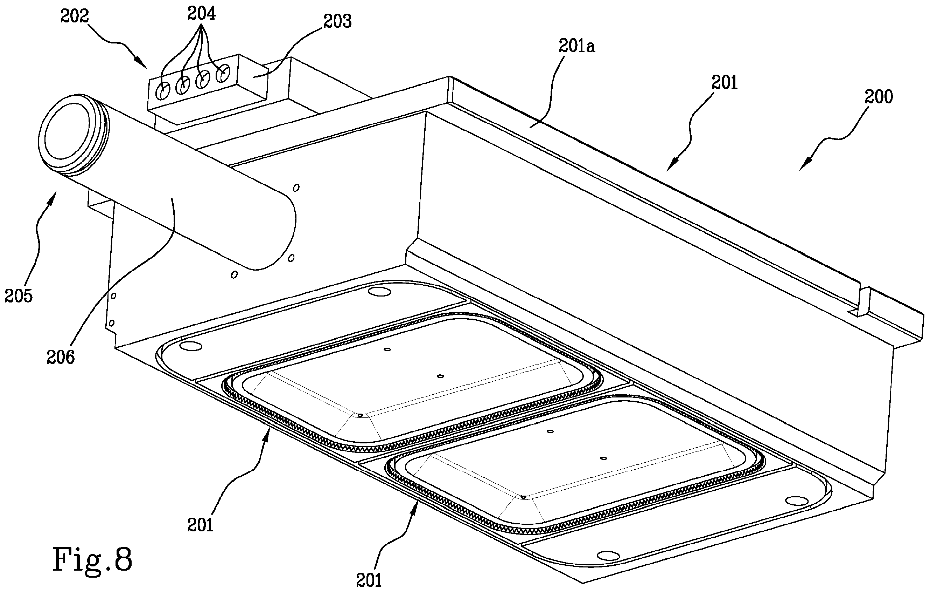

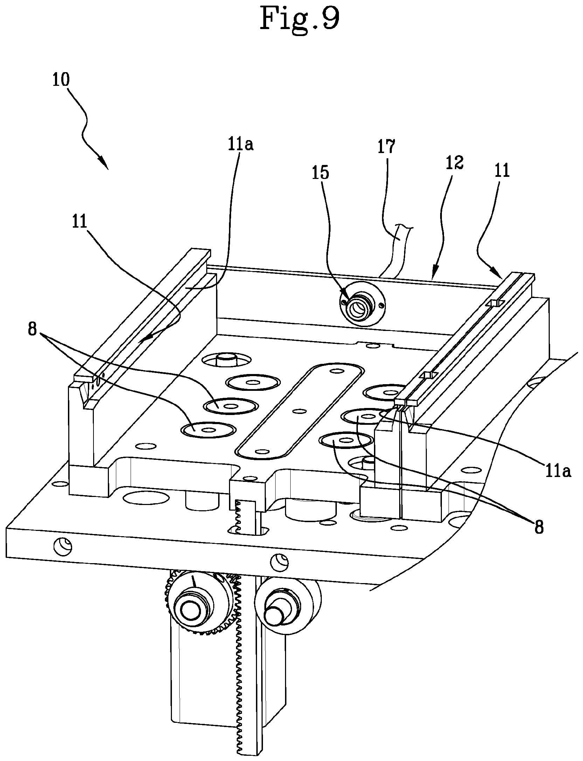

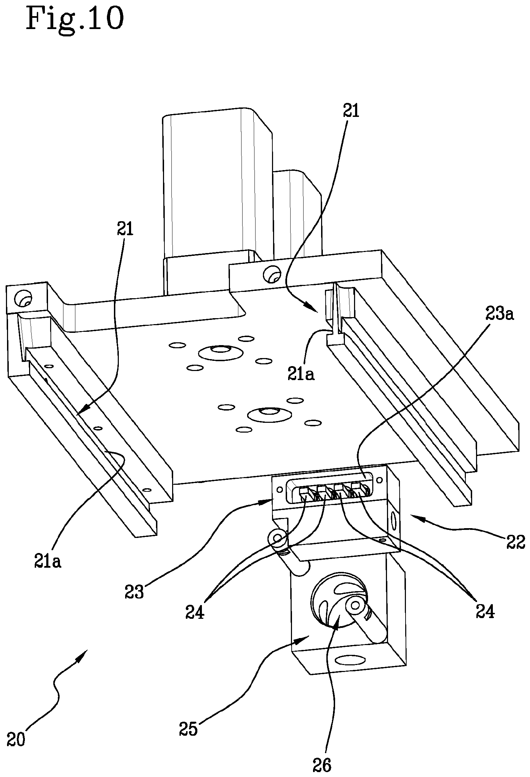

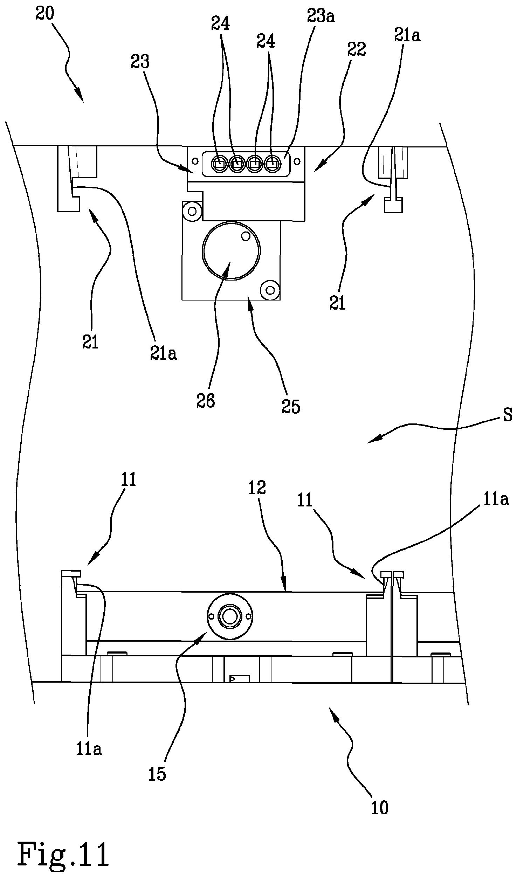

- Figure 8 is a perspective view of the mould in Figure 7 from a different angle;
- Figures from 9 to 11 show a few details of the machine in Figure 1, with some parts removed to highlight others;

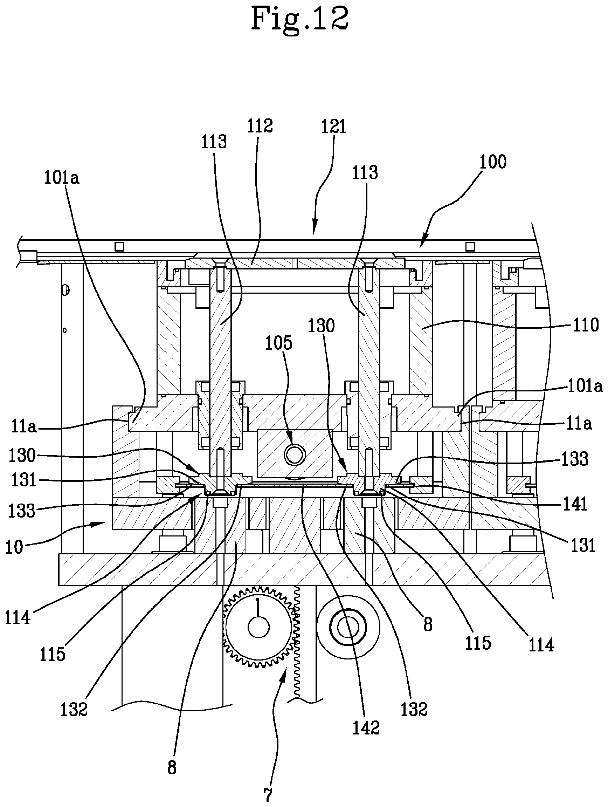

- Figure 12 shows a sectional view of a detail of the machine in Figure 1, with some parts removed to highlight others.

With reference to the figures, a heat-sealing machine for food containers, which is the object of the present invention, is indicated as a whole by the numeral 1 and will be hereinafter referred to by the term "machine 1".

This machine 1 is suitable for processing food-grade containers defining a containment volume for a food product and having an upper opening for accessing this containment volume, for example pre-formed plastic trays. These containers will henceforth be referred to as containers "C".

The machine 1 has a base 2 suitable for supporting the machine on a flat floor and comprising a conveying unit 5 configured to feed a plurality of containers "C" along a feeding direction from an input station "I" to a sealing station "S".

The input station "I" can be configured to receive products positioned, for example manually, by an operator or to be connected in-line to different machines belonging to the same production chain so as to receive containers "C" directly filled with a product by these machines in an automatic manner.

Preferably, the conveying unit 5 comprises sliding loaders on a sliding surface 6 for feeding the containers "C" on the sliding surface 6 along the same.

Above and below the sealing station "S", the machine 1 comprises at least one lower mould 100, which is a further object of the present invention, and an upper mould 200 mutually movable in the vertical direction between a receiving position and a sealing position.

The lower 100 and upper moulds 200, when arranged in the receiving position, are configured to receive one or more container(s) "C" from the conveying unit 5, and in the sealing position to abut against each other to seal a wrap or protective film on respective upper openings of these containers "C" so as to seal them.

In a preferred embodiment, the lower 100 and upper moulds 200, when abutted against each other, are further configured to define a fluid-tight sealed volume on which pneumatic means (not shown) act to extract the air therefrom and, optionally, to re-inject a specific gas mixture.

In the embodiment shown herein, the machine 1 comprises two lower moulds 100 and two upper moulds 200 arranged in line along the feeding direction of the plurality of containers "C", each one configured to receive two containers "C" side by side.

Preferably, in order to position the protective film between the two lower and upper moulds 100 and 200, the machine 1 comprises unwinding means configured to unwind a continuous strip of film from a first roll and rewind it onto a second roll, doing so between the two rolls in the sealing station "S" between the lower mould 100 and the upper mould 200. In this way, when the lower and upper moulds 100 and 200 abut against each other in the sealing position, a portion of film remains interposed therebetween above the upper opening of the containers "C" being processed.

The machine 1 comprises a lower support 10 defining a housing seat for the lower mould 100 arranged vertically below the sealing station "S", and an upper support 20 defining a housing seat for the upper mould 200 arranged vertically above the sealing station "S".

The lower support 10 and the upper support 20 are configured to support and hold in position the lower and upper moulds 100 and 200 in the respective housing seats and to move them reciprocally in the vertical direction from the receiving position to the sealing position.

In the preferred embodiment, the upper support 20 is fixed and integral with the base 2 of the machine 1 so as to hold the upper mould 200 in a fixed position while the lower support 10 is vertically movable to move the lower mould 100 with respect to the base 2 of the machine 1 and to the upper mould 200.

To this end, the machine 1 comprises actuation means 7 acting on the lower support 10 to move it vertically between the receiving position and the sealing position.

To allow reversible positioning of the lower and upper moulds 100 and 200, both the lower support 10 and the upper support 20 have respective support portions 11 and 21, preferably comprising sliding guides 11a and 21a.

Similarly, the lower 100 and upper moulds 200 have connection portions 101 and 201 configured to engage the respective support portions 11 and 21, so as to cause the lower 100 and upper moulds 200 to be connected to the machine 1 reversibly, which allows disassembly and replacement thereof.

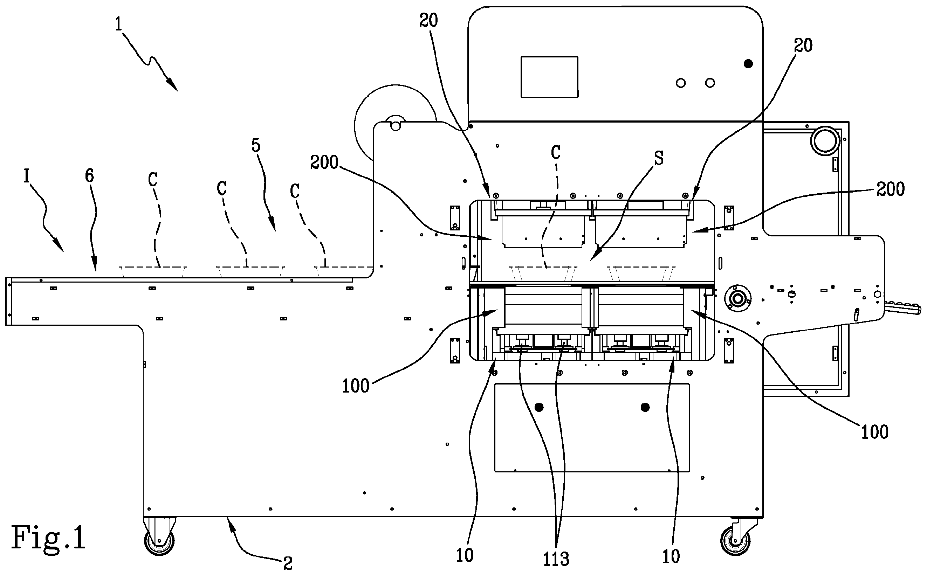

Preferably, the connection portions 101 and 201 comprise sliding guides 101a and 201a configured to engage the sliding guides 11a and 21a of the lower and upper supports 10 and 20, so as to allow a sliding and constrained movement of the respective lower and upper moulds 100 and 200 between an operating configuration, shown in Figure 1, and a disassembled configuration, which allows the replacement thereof.

The sliding guides 11a, 21a, 101a and 201a comprise, for example, linear protrusions and reciprocal grooves, as in the solution shown herein, or rails and wheels arranged in line and configured to engage these rails.

In the preferred embodiment, the sliding guides 11a and 21a are oriented along a horizontal direction perpendicular to the feeding direction imparted by the conveying unit 5 to the containers "C", so as to allow the lower and upper moulds 100 and 200 to move in a direction perpendicular thereto. More specifically, in the operating configuration, the lower 100 and upper moulds 200 are arranged in the respective housing seats vertically below or above the sealing station "S" and are integral with the respective lower and upper supports 10 and 20.

In order to disassemble the lower and upper moulds 100 and 200, they need to be removed from the respective housing seat by slidingly moving them along the respective sliding guides 11a and 21a until they are completely removed in the disassembled configuration.

With reference to the upper mould 200, it has an electrical resistance 201 arranged so as to heat a lower surface of the upper mould 200 along a path that follows the shape of the edge of a container "C".

In order to power the resistance 201, the upper mould 200 has an electrical connector 202 arranged on a rear surface thereof. Similarly, the upper support 20 has a respective electrical connector 22 arranged on a rear surface thereof and configured to engage the electrical connector 202 of the upper mould 200 during its sliding along the sliding guide 21a towards its housing seat upon transition from the disassembled configuration to the operating configuration.

Preferably, the electrical connectors 22 and 202 comprise a plug 203 and a respective socket 23 configured to engage with each other during the final phase of the constrained movement of the upper mould 200 towards the respective housing seat. Both the plug 203 and the socket 23 are made of an electrically insulating, preferably polymeric material.

In the preferred embodiment, the upper mould 200 comprises the plug 203 rigidly and integrally connected thereto so as to define the electrical connector 202 and extending away from its rear surface parallel to the direction of the respective sliding guides 201a.

Similarly, the upper support 20, particularly the electrical connector 22 comprises the socket 23, which in turn defines a hollow seat 23a extending parallel to the sliding guides 21a.

The plug 203 is counter-shaped to the hollow seat 23a and arranged so as to engage it when the upper mould 200 is in the operating configuration in the respective housing seat.

More specifically, the plug 203 has a plurality of slots 204, also oriented parallel to the sliding guides 201a, and comprises a plurality of electrical contacts arranged therein.

These electrical contacts are electrically connected to the electrical resistance 201, to power it, and optionally to a plurality of temperature and/or pressure sensors mounted on the mould 200, to power them and transmit signal currents from them.

The socket 23 comprises a plurality of conductive terminals 24 arranged inside the hollow seat 23a and protruding from a bottom surface in a direction parallel to the sliding guide 21a towards the housing seat of the upper mould 200.

The terminals 24 are configured to engage respective slots 204 when the upper mould 200 is arranged in the operating configuration in the respective housing seat, and to come into contact with the electrical contacts arranged inside the slots 204.

In particular, the terminals 24 are configured to engage the respective slots 204 during the final phase of the constrained movement of the upper mould 200 towards its housing seat upon transition from the disassembled configuration to the operating configuration, and the terminals 24 are configured to come into contact with the electrical contacts inside the slots 204 when the upper mould 200 abuts against an end stop of the upper support 20, not shown.

In the embodiments wherein the machine 1 is configured to remove and re-inject gas from/into the containers "C", the upper mould 200 has a concave lower surface 220 suitable for defining an upper volume, which is part of the sealed volume defined by the lower and upper moulds 100 and 200 when they are in abutment against one another.

The concave lower surface 220 is configured to be arranged above the film strip interposed between the lower and upper moulds 100 and 200 in mutual abutment.

In order to control the pressure in the upper volume, which is adjacent to the film in the sealing position, the upper mould 200 has a pneumatic connector 205 and sealed internal ducts for connecting the upper volume to the pneumatic connector 205.

Preferably, the pneumatic connector 205 is defined by a rigid annular protrusion 206 extending away from the rear surface of the mould 200 in a direction parallel to the sliding guide 201a.

Similarly, the upper support 20 comprises a pneumatic connector 25 configured to engage the pneumatic connector 205 of the upper mould 200 to establish a sealed fluid connection between the upper volume and the pneumatic means of the machine 1. This allows the pressure acting on top of the film to be adjusted when the lower and upper moulds 100 and 200 are in the sealing position.

Preferably, the pneumatic connector 25 comprises an intake hole 26 counter-shaped to the annular protrusion 206 and extending in a direction parallel to the sliding guide 21a.

Advantageously, the annular protrusion 206 is configured and positioned so as to engage the intake hole 26 during a constrained movement of the upper mould 200 along the respective sliding guides 21a towards its housing seat upon transition between the disassembled configuration and the operating configuration, in particular during a final phase of this movement.

With reference to the lower mould 100, it comprises a box-like frame 110, in turn defining a lower chamber 120 open at the top and having the aforesaid connection portions 101, in particular the sliding guides 101a.

In the embodiments wherein the machine 1 is configured to remove and re-inject gas from/into the containers "C", the lower chamber 120 is complementary to the upper volume of the upper mould 200 so as to define the aforementioned sealed volume when the lower mould 100 abuts against the upper mould 200.

To allow removal and re-introduction of gas from/into the lower chamber 120, which in use shares the same atmosphere with the containers "C" being processed, the lower mould 100 has a pneumatic connector 105 and sealed internal ducts for connecting the lower chamber 120 to the pneumatic connector 105.

In the preferred embodiment, the pneumatic connector 105 of the lower mould 100 is a female connector, i.e. a hole appearing from a rear surface of the lower mould 100 and extending parallel to its sliding guides 101a. Similarly, the lower support 10 comprises a pneumatic connector 15 configured to engage the pneumatic connector 105 of the lower mould 100 to establish a sealed fluid connection between the lower chamber 120 and the pneumatic means of the machine 1.

In order to support the pneumatic connector 15, the lower support 10 comprises a rear wall 12 preferably suitable to determine an end stop for the sliding movement of the lower mould 100 in the operating configuration.

In the preferred embodiment, the pneumatic connector 15 of the lower support 10 is a male connector, i.e. a rigid tubular body counter-shaped to the female connector and fixed to a first side of the rear wall 12 facing the housing seat of the lower mould 100.

Advantageously, the male pneumatic connector 15 extends towards the housing seat of the lower mould 100 in a direction parallel to the sliding guides 11a, so as to engage the female pneumatic connector 105 during the movement of the lower mould 100 along the respective sliding guides 11a towards its housing seat upon transition from the disassembled configuration to the operating configuration, in particular during a final phase of this transition.

In the preferred solution wherein the lower mould 100 is vertically movable between the receiving position and the sealing position, the pneumatic connector 15 of the lower support 10 is hermetically connected to the pneumatic means of the machine 1 by means of a flexible pipe 17 connected to the pneumatic connector 15 on a second side of the rear wall 12.

To allow the containers "C" to move from the upper surface 6 of the machine 1 to the lower mould 100, the frame 110 defines a flat upper surface 111 arranged horizontally and in alignment with the feeding direction of the containers "C" on the upper surface 6 when the lower mould 100 is housed in the respective housing seat in the receiving position.

The upper surface 111 has one or more openings 121 for accessing the lower chamber 120, preferably one for each container "C", which the lower mould 100 is configured to seal simultaneously, in particular two in number in the illustrated solution.

The openings 121 define respective processing seats for the containers "C" so that the upper edges thereof can be pressed against the electrical resistance 201 of the upper mould 200 in the sealing position, and so that the lower chamber 120 is in fluid communication with the inside of the containers "C".

Moreover, the lower mould 100 comprises one or more plates 112 parallel to the upper surface 111 and movable with respect to the frame 110 between a raised position, wherein the same engage respective openings 121 so as to be arranged flush with the upper surface 111, and a lowered position, wherein the plates 112 are arranged below the upper surface 111.

In the raised position, the containers "C" can be dragged by moving means 5 sliding between the upper surface 111 and the plates 112, without engagement of the openings 121 by the containers "C".

On the other hand, in the lowered position, the containers "C" engage the openings 121 so as to be at least partially housed in the lower chamber 120.

In order to support and move the plates 112, the lower mould 100 comprises a plurality of vertical pistons 113, slidably connected to the frame 110 and vertically movable between the aforementioned raised and lowered positions.

Each piston 113 is connected at the top to a respective plate 112 and has a lower resting portion 114 defining a lower end 115 of the piston 113.

To make the pistons 113 move, the machine 1 has a plurality of abutment elements 8 arranged vertically below the sealing station "S" and the lower support 10.

The lower ends 115 of each piston 113 are configured to abut against respective abutment elements 8 when the lower mould 100 is housed in its housing seat in the operating configuration.

Preferably, the movement of the pistons 113 between the raised position and the lowered position is implemented by a movement of the lower support 10 by means of the actuation means 7.

Following this implementation, the support portions 11 are movable in the vertical direction, integrally with the frame 110 of the lower mould 100, from the receiving position to the sealing position.

Vice versa, the abutment elements 8 remain integral with the base 2 of the machine 1, and the reciprocal movement in the vertical direction between the support portions 11 and the abutment elements 8 therefore involves a movement of the pistons 113 and the plates 112 with respect to the frame 110.

This movement, if considered with reference to the machine 1, is therefore a movement of the frame 110 alone, whereas the pistons 113 and the plates 112 remain integral with the base 2.

In this embodiment, the positioning of the plates 112 in the raised position therefore occurs concurrently with the positioning of the lower mould 100 in the receiving position, and the positioning of the plates 112 in the lowered position occurs concurrently with the positioning of the lower mould 100 in the sealing position.

Preferably, the lower mould 100 comprises a plurality of elastic elements, not shown, acting between the frame 110 and the pistons 113 to press the latter downwards, so as to implement or promote the movement of the plates 112 from the raised position to the lowered position during the vertical movement of the lower mould 100 from the receiving position to the sealing position.

In order to make the lower mould 100 move from the operating configuration to the disassembled configuration, the pistons 113 need to be blocked so as to prevent them from falling downwards after the displacement of the respective ends 115 from the corresponding abutment elements 8.

Advantageously, for this purpose, each piston 113 comprises a stop disk 130 arranged along its direction of extension between the plate 112 and the lower end 115 and has a respective engagement portion 131 defined by a lower shoulder 132 of the stop disk 130.

Preferably, each stop disk 130 also has a lower flared surface 133 having a truncated-cone shape extending around the direction of extension of the respective piston 113.

The lower mould 100 comprises a locking element 140 connected to the frame 110 and movable relative thereto between an engagement position, wherein it engages the engagement portions 131 of the pistons 113 to prevent them from moving downwards, and a disengagement position, wherein the locking element 140 releases the engagement portions 131 of the pistons 113, to allow them to move vertically between the raised position and the lowered position.

Preferably, the frame 110 defines grooves 141, which in the preferred embodiment are oriented parallel to the sliding guide 101a, and the locking element 140 comprises a plate 142, which slidingly engages the grooves 141 so as to be movable and define the engagement and disengagement positions.

In the preferred embodiment, this plate 142 is oriented parallel to the upper surface 111 and arranged below the plates 112, more particularly at a lower end of the frame 110.

Furthermore, the plate 112 is preferably rectangular and has a shape that substantially follows the horizontal plan shape of the frame 110.

The plate 142 has respective engagement holes 143, each one passed through by a respective piston 113 and shaped so as to allow the plate 142 to move along the grooves 141 between the engagement and the disengagement position.

Preferably, each engagement hole 143 extends along the sliding direction of the plate 142 along the grooves 141, so as to have an enlarged portion 144 and a bottleneck 145.

Each stop disk 130 has a diameter greater than the width of the bottleneck 145 perpendicularly to the sliding direction of the plate 142.

The enlarged portion 144 and the bottleneck 145 are arranged and configured so that each piston 113 engages the enlarged portion 144 when the plate 142 is in the disengagement position and that the same piston 113 engages the corresponding bottleneck 145 when the plate 142 is in the engagement position.

The stop disks 130 and the respective engagement holes 143 are sized and mutually positioned so that each stop disk 130 can pass through the respective enlarged portion 144 during the movement of the respective piston 113 between the raised position and the lowered position when the plate 142 is in the disengagement position.

In addition, the plate 142 and the stop disks 130 are mutually arranged so that when the plate 142 is the engagement position the shoulder 132 abuts against a wall of the plate 142 that is adjacent to the bottleneck 145 to block the movement of the pistons 113 downwards when the plate 142 is in the engagement position.

Moreover, the resting portion 114 has a diameter smaller than the width of the respective bottleneck 145 perpendicularly to the sliding direction of the plate 142, so that the same resting portion 114 engages the bottleneck 145 during the movement of the plate 142 from the disengagement position to the engagement position and does not prevent the movement of the plate 142 itself.

Preferably, the lower flared surface 133 exhibited by each stop disk 130 is configured to engage an edge of the corresponding engagement hole 143 during the movement of the plate 142 from the disengagement position to the engagement position, so as to define an invitation for the sliding thereof against the engagement portions 131.

The lower flared surface 133 and the plate 142 are configured so that the oblique sliding of the edge of the engagement hole 143 against the lower flared surface 133 causes the respective piston 113 to rise and then transfers the pressure acting on the pistons 113 from the abutment elements 8 to the plate 142.

A further object of the present invention is a kit comprising a heat-sealing machine 1 for food containers of the type described above and a plurality of lower and upper moulds 100 and 200, as described above, configured for heat-sealing respective mutually different food containers "C", wherein each pair of lower and upper moulds 100 and 200 is suitable to heat-seal a given type of container "C".

The present invention achieves the intended object, overcoming the drawbacks of the prior art.

The engagement portions and the locking element configured and arranged as described above, in fact, allow the operator of the machine to lock all the pistons and the plates of the mould by means of a single movement of the locking element from the disengagement position to the engagement position, allowing considerable savings in terms of downtime.

## Claims

1. A lower mould (100) for a heat-sealing machine for food containers (1), configured to receive one or more food containers (C) moved by a conveying unit (5) of a heat-sealing machine (1) along a feeding direction towards a sealing station (S),
said lower mould (100) comprising:
- a frame (110) having connection portions (101) configured to reversibly engage reciprocal support portions (11) of said machine (1) during a positioning of said lower mould (100) in a respective housing seat, and a flat upper surface (111) arranged horizontally and in alignment with said feeding direction when the lower mould (100) is housed in the respective housing seat, said upper surface (111) having one or more openings (121) configured to house one or more of said containers (C);
- one or more plates (112) parallel to the upper surface (111);
- one or more vertical pistons (113) supporting said plates (112), slidingly connected to the frame (110) and vertically movable with respect to said frame (110) between a raised position, wherein said plates (112) engage with said openings (121) to arrange themselves flush with said upper surface (111) and a lowered position, wherein said plates (112) are arranged below said upper surface (111) so that said openings (121) define processing seats for said containers (C),
each piston (113) having a lower end (115) configured to abut against a respective abutment element (8) of said machine (1) when said lower mould (100) is housed in the housing seat, a reciprocal movement between said support portions (11) and said abutment elements (8) determining a vertical movement of said pistons (113) between the raised position and the lowered position;
**characterised in that**
each piston (113) has a respective engagement portion (131), and said lower mould (100) comprises a locking element (140), positioned below said plates (112), slidingly connected to said frame (110) between an engagement position, wherein said locking element (140) interferes with the engagement portions (131) of the pistons (113) to prevent a downward movement of said pistons, (113) and a disengagement position, wherein said locking element (140) allows a vertical movement of said pistons (113) between the raised position and the lowered position.

2. The lower mould (100) according to claim 1, wherein said locking element (140) comprises a plate (142) slidingly mounted in respective grooves (141) of said frame (110) so as to be movable between said engagement position and said disengagement position, said plate (142) having respective engagement holes (143) operatively crossed by said pistons (113).

3. The lower mould (100) according to claim 2, wherein each engagement hole (143) is developed along a sliding direction of the plate (142), so as to have an enlarged portion (144), and a bottleneck (145) connected to the enlarged portion (144), arranged so that each piston (113) engages the enlarged portion (144) of the respective engagement hole (143) when the plate (142) is in the disengagement position and the piston itself (113) engages the relative bottleneck (145) when the plate (142) is arranged in the engagement position, so as to prevent the vertical translation thereof.

4. The lower mould (100) according to claim 3, wherein each engagement portion (131) is defined by a lower shoulder (132) presented by said piston (113) between the respective plate (112) and the lower end (115) thereof, said lower shoulder (132) being configured to abut against a wall of said plate (142) adjacent to the bottleneck (145) of the respective engagement hole (143), to block the downward movement when the plate (142) is arranged in the engagement position.

5. The lower mould (100) according to claim 4, wherein each piston (113) comprises a stop disk (130) having said lower shoulder (132) and having a diameter greater than the width of said bottleneck (145), in a perpendicular direction to said sliding direction, said stop disk (130) being dimensioned to cross said enlarged portion (144) during a movement of said piston (113) between the raised position and the lowered position when the plate (142) is in the disengagement position and to abut against the wall of the plate (142) adjacent to the bottleneck (145) when the plate (142) is in the engagement position.

6. The lower mould (100) according to claim 5, wherein said stop disk (130) has a lower flared surface (133) with respect to the direction of development of the respective piston (113), so as to define an invitation to engage with an edge of the relative engagement hole (143) of said plate (142) during a movement of the plate (142) from the disengagement position to the engagement position, the sliding of said edge against said lower flared surface (133) determining a lifting of the relative piston (113).

7. The lower mould (100) according to one or more of the claims from 3 to 6, wherein said piston (113) has a lower resting portion (114) arranged below said engagement portion (131) and defining said lower end (115), said resting portion (114) having a diameter smaller than the width of the respective bottleneck (145), in a perpendicular direction to said sliding direction and being arranged so as to engage with said bottleneck (145) during a movement of the plate (142) from the disengagement position to the engagement position.

8. The lower mould (100) according to one or more of the claims from 2 to 7, wherein said connection portions (101) comprise sliding guides (101a) configured to engage with respective sliding guides (11a) of the heat-sealing machine (1) during an insertion of said lower mould (100) in the respective housing seat, the sliding direction of the plate (142) being parallel to said sliding guides (101a).

9. The lower mould (100) according to one or more of the preceding claims, comprising a plurality of elastic elements acting between said frame (110) and said pistons (113) to press said pistons (113) downwards, said elastic elements being configured to actuate a movement of said pistons (113) from the raised position to the lowered position during a vertical movement of said frame (110) with respect to the machine (1).

10. A heat-sealing machine (1) comprising:
- a conveying unit (5) configured to move a plurality of food containers (C) towards a sealing station (S);
- a plurality of abutment elements (8) arranged below said sealing station (S);
- a lower support (10) defining a housing seat, wherein a lower mould (100) according to one or more of the claims from 1 to 9 is housed, so that the connection portions (101) of the lower mould (100) engage with reciprocal support portions (11) presented by said lower support (10) and so that the lower ends (115) of the pistons (113) abut against said abutment elements (8);
- an upper mould (200) arranged above the sealing station (S) and associated with the lower mould (100) to allow a heat-sealing of the containers (C) in the sealing station;
- actuation means (7) acting on the lower support to move it vertically from a receiving position, wherein the lower mould (100) allows the access of containers (C) to the sealing station (S), to a sealing position, wherein the lower mould (100) abuts against the upper mould (200) to heat seal one or more containers (C), so as to determine a reciprocal vertical movement between said support portions (11) and said abutment elements (8) to actuate a vertical movement of the pistons (113) of the lower mould (100) between the raised position and the lowered position.

## Patentansprüche

1. Ein unteres Formwerkzeug (100) für eine Heißsiegelmaschine für Lebensmittelbehälter (1), ausgelegt, um einen oder mehrere Lebensmittelbehälter (C) aufzunehmen, die von einer Fördereinrichtung (5) einer Heißsiegelmaschine (1) entlang einer Vorschubrichtung zu einer Versiegelungsstation (S) befördert werden,
wobei das besagte untere Formwerkzeug (100) umfasst:
- einen Rahmen (110) mit Anschlussabschnitten (101) zum reversiblen, gegenseitigen Ineinandergreifen mit Stützabschnitten (11) der besagten Maschine (1) während einer Positionierung des besagten unteren Formwerkzeugs (100) in einer zugeordneten Aufnahme, und eine flache obere Oberfläche (111), die horizontal angeordnet ist und in einer Linie mit der besagten Vorschubrichtung ausgerichtet ist, wenn das untere Formwerkzeug (100) in der zugeordneten Aufnahme aufgenommen ist, wobei die besagte obere Oberfläche (111) eine oder mehrere Öffnungen (121) aufweist, die dazu ausgelegt sind, einen oder mehrere der genannten Behälter (C) aufzunehmen;
- eine oder mehrere, zu der oberen Oberfläche (111) parallele Platten (112);
- einen oder mehrere vertikale Kolben (113), welche die besagten Platten (112) stützen, verschiebbar an dem Rahmen (110) angeschlossen sind und bezüglich des Rahmens (110) vertikal beweglich sind zwischen einer angehobenen Position, in welcher die besagten Platten (112) in die besagten Öffnungen (121) eingreifen, um sich bündig zu der besagten oberen Oberfläche (111) anzuordnen, und einer abgesenkten Position, in welcher die besagten Platten (112) unterhalb der besagten oberen Oberfläche (111) angeordnet sind, so dass die besagten Öffnungen (121) die Bearbeitungsaufnahmen für die besagten Behälter (C) bilden;
wobei jeder Kolben (113) ein unteres Ende (115) aufweist, das dazu ausgelegt ist, an einem zugeordneten Widerlagerelement (8) der besagten Maschine (1) anzuliegen, wenn das besagte untere Formwerkzeug (100) in der Aufnahme aufgenommen ist, wobei eine wechselseitige Bewegung zwischen den besagten Stützabschnitten (11) und den besagten Widerlagerelementen (8) eine vertikale Bewegung der besagten Kolben (113) zwischen der angehobenen und der abgesenkten Position bedingt;
**dadurch gekennzeichnet, dass**
jeder Kolben (113) einen zugeordneten Eingriffsbereich (131) aufweist und das besagte untere Formwerkzeug (100) ein Verriegelungselement (140) umfasst, das sich unterhalb der besagten Platten (112) befindet und an dem Rahmen (110) angeordnet ist, verschiebbar zwischen einer Eingriffsposition, in welcher das besagte Verriegelungselement (140) mit den Eingriffsbereichen (131) der Kolben (113) in Eingriff tritt, um eine Abwärtsbewegung der besagten Kolben (113) zu verhindern, und einer Löseposition, in welcher das besagte Verriegelungselement (140) eine vertikale Bewegung der besagten Kolben (113) zwischen der angehobenen und der abgesenkten Position zulässt.

2. Das untere Formwerkzeug (100) gemäß Anspruch 1, wobei das besagte Verriegelungselement (140) eine Platte (142) umfasst, die in zugeordneten Nuten (141) des besagten Rahmens (110) verschiebbar gelagert ist, so dass sie zwischen der besagten Eingriffsposition und der besagten Löseposition bewegbar ist, wobei die besagte Platte (142) zugeordnete Eingriffsöffnungen (143) aufweist, die von den besagten Kolben (113) während des Betriebs durchquert werden.

3. Das untere Formwerkzeug (100) gemäß Anspruch 2, wobei jede Eingriffsöffnung (143) entlang einer Verschieberichtung der Platte (142) derart ausgestaltet ist, dass sie einen ausgeweiteten Bereich (144) aufweist sowie eine mit dem ausgeweiteten Bereich (144) verbundene Engstelle (145), welche derart angeordnet sind, dass jeder Kolben (113) in den ausgeweiteten Bereich (144) der zugeordneten Eingriffsöffnung (143) eingreift, wenn sich die Platte (142) in der Löseposition befindet, und der Kolben (113) in die zugeordnete Engstelle (145) eingreift, wenn sich die Platte (142) in der Eingriffsposition befindet, um so deren vertikale Translation zu verhindern.

4. Das untere Formwerkzeug (100) gemäß Anspruch 3, wobei jeder Eingriffsbereich (131) durch eine niedrigere Schulter (132) umgrenzt wird, die von dem besagten Kolben (113) zwischen der zugeordneten Platte (112) und deren unterem Ende (115) präsentiert wird, wobei die besagte niedrigere Schulter (132) derart ausgelegt ist, dass sie gegen eine Wand der besagten Platte (142) neben der Engstelle (145) der zugeordneten Eingriffsöffnung (143) stößt, um die Abwärtsbewegung zu blockieren, wenn sich die Platte (142) in der Eingriffsposition befindet.

5. Das untere Formwerkzeug (100) gemäß Anspruch 4, wobei jeder Kolben (113) eine Anschlagscheibe (130) umfasst, welche die besagte, niedrigere Schulter (132) aufweist und einen Durchmesser hat, der größer ist als die Weite der besagten Engstelle (145) in einer Richtung rechtwinklig zu der besagten Vorschubrichtung, wobei die besagte Anschlagscheibe (130) derart dimensioniert ist, dass sie während einer Bewegung des besagten Kolbens (113) zwischen der angehobenen Position und der abgesenkten Position den besagten ausgeweiteten Bereich (144) durchquert, wenn sich die Platte (142) in der Löseposition befindet, und gegen die Wand der Platte (142) neben der Engstelle (145) stößt, wenn sich die Platte (142) in der Eingriffsposition befindet.

6. Das untere Formwerkzeug (100) gemäß Anspruch 5, wobei die besagte Anschlagscheibe (130) eine in Bezug auf die Entwicklungsrichtung des zugeordneten Kolbens (113) aufgeweitete Unterseite (133) aufweist, als Einladung zum Eingriff mit einer Kante der zugeordneten Eingriffsöffnung (143) der besagten Platte (142) während einer Bewegung der Platte (142) von der Löseposition zu der Eingriffsposition, wobei die Verschiebung der besagten Kante gegen die besagte aufgeweitete Unterseite (133) ein Anheben des zugeordneten Kolbens (113) bestimmt.

7. Das untere Formwerkzeug (100) gemäß einem oder mehreren der Ansprüche 3 bis 6, wobei der besagte Kolben (113) einen unteren stillstehenden Bereich (114) aufweist, der unterhalb des besagten Eingriffsbereichs (131) angeordnet ist, und das besagte untere Ende (115) definiert, wobei der besagte stillstehende Bereich (114) einen Durchmesser aufweist, der kleiner ist als die Weite der zugeordneten Engstelle (145) in einer Richtung rechtwinklig zu der besagten Verschieberichtung, und derart angeordnet ist, dass er während einer Bewegung der Platte (142) von der Löseposition zu der Eingriffsposition mit der besagten Engstelle (145) in Eingriff gelangt.

8. Das untere Formwerkzeug (100) gemäß einem oder mehreren der Ansprüche 2 bis 7, wobei die besagten Anschlussabschnitte (101) Gleitführungen (101a) aufweisen, welche dazu bestimmt sind, mit den zugeordneten Gleitführungen (11a) der Heißsiegelmaschine (1) in Eingriff zu treten während des Einfügens des besagten unteren Formwerkzeugs (100) in die zugeordnete Aufnahme, wobei die Verschieberichtung der Platte (142) parallel zu den besagten Gleitführungen (101a) ist.

9. Das untere Formwerkzeug (100) gemäß einem oder mehreren der vorhergehenden Ansprüche, umfassend eine Mehrzahl von elastischen Elementen, die zwischen dem besagten Rahmen (110) und den besagten Kolben (113) wirken, um die besagten Kolben (113) nach unten zu drücken, wobei die besagten elastischen Elemente dazu ausgelegt sind, während einer vertikalen Bewegung des besagten Rahmens (110) gegenüber der Maschine (1) eine Bewegung der besagten Kolben (113) von der angehobenen Position in die abgesenkte Position zu bewirken.

10. Eine Heißsiegelmaschine (1), umfassend:
- eine Fördereinrichtung (5), die dazu ausgelegt ist, eine Mehrzahl von Lebensmittelbehältern (C) zu einer Versiegelungsstation (S) zu befördern;
- eine Mehrzahl von Widerlagerelementen (8), die unterhalb der besagten Versiegelungsstation (S) angeordnet sind;
- eine untere Stütze (10), die eine Aufnahme definiert, in welcher ein unteres Formwerkzeug (100) gemäß einem oder mehreren der Ansprüche 1 bis 9 aufgenommen ist, so dass die Anschlussabschnitte (101) des unteren Formwerkzeugs (100) mit den gegenüberliegenden Stützabschnitten (11) in Eingriff gelangen, welche von der besagten unteren Stütze (10) präsentiert werden, so dass die unteren Enden (115) der Kolben (113) gegen die besagten Widerlagerelemente (8) stoßen;
- ein oberes Formwerkzeug (200), das oberhalb der Versiegelungsstation (S) angeordnet und mit dem unteren Formwerkzeug (100) vereinigt ist, um die Heißversiegelung der Behälter (C) in der Versiegelungsstation zu ermöglichen;
- ein Betätigungsmittel (7), das auf die untere Stütze einwirkt, um sie vertikal von einer Aufnahmeposition, in welcher das untere Formwerkzeug (100) den Zugang von Behältern (C) zu der Versiegelungsstation (S) ermöglicht, in eine Versiegelungsposition zu bewegen, in welcher das untere Formwerkzeug (100) an dem oberen Formwerkzeug (200) anliegt, um einen oder mehrere Behälter (C) heiß zu versiegeln, um eine gegenseitige vertikale Bewegung zwischen den besagten Stützabschnitten (11) und den besagten Widerlagerelementen (8) zu bestimmen, und eine vertikale Bewegung der Kolben (113) des unteren Formwerkzeugs (100) zwischen der angehobenen Position und der abgesenkten Position zu veranlassen.

## Revendications

1. Moule inférieur (100) pour une machine de thermoscellage pour des récipients alimentaires (1), configuré pour recevoir un ou plusieurs récipients alimentaires (C) déplacés par une unité de transport (5) d'une machine de thermoscellage (1) le long d'une direction d'alimentation vers une station de scellement (S),
ledit moule inférieur (100) comprenant :
- un bâti (110) ayant des parties de raccordement (101) configurées pour mettre en prise, de manière réversible, des parties de support réciproques (11) de ladite machine (1) pendant un positionnement dudit moule inférieur (100) dans un siège de logement respectif, et une surface supérieure plate (111) agencée horizontalement et en alignement avec ladite direction d'alimentation lorsque le moule inférieur (100) est logé dans le siège de logement respectif, ladite surface supérieure (111) ayant une ou plusieurs ouvertures (121) configurées pour loger un ou plusieurs desdits récipients (C) ;
- une ou plusieurs plaques (112) parallèles à la surface supérieure (111) ;
- un ou plusieurs pistons verticaux (113) supportant lesdites plaques (112), raccordés de manière coulissante au bâti (110) et verticalement mobiles par rapport audit bâti (110) entre une position levée, dans laquelle lesdites plaques (112) se mettent en prise avec lesdites ouvertures (121) pour les agencer à fleur avec ladite surface supérieure (111) et une position abaissée, dans laquelle lesdites plaques (112) sont agencées au-dessous de ladite surface supérieure (111) de sorte que lesdites ouvertures (121) définissent des sièges de traitement pour lesdits récipients (C),
chaque piston (113) ayant une extrémité inférieure (115) configurée pour venir en butée contre un élément de butée (8) respectif de ladite machine (1) lorsque ledit moule inférieur (100) est logé dans le siège de logement, un mouvement réciproque entre lesdites parties de support (11) et lesdits éléments de butée (8) déterminant un mouvement vertical desdits pistons (113) entre la position levée et la position abaissée ;
**caractérisé en ce que** :
chaque piston (113) a une partie de mise en prise (131) respective, et ledit moule inférieur (100) comprend un élément de verrouillage (140) positionné au-dessous desdites plaques (112), raccordé de manière coulissante audit bâti (110) entre une position de mise en prise dans laquelle ledit élément de verrouillage (140) interfère avec les parties de mise en prise (131) des pistons (113) pour empêcher un mouvement descendant desdits pistons (113) et une position de dégagement, dans laquelle ledit élément de verrouillage (140) permet un mouvement vertical desdits pistons (113) entre la position levée et la position abaissée.

2. Moule inférieur (100) selon la revendication 1, dans lequel ledit élément de verrouillage (140) comprend une plaque (142) montée de manière coulissante dans des rainures (141) respectives dudit bâti (110) afin d'être mobile entre ladite position de mise en prise et ladite position de dégagement, ladite plaque (142) ayant des trous de mise en prise (143) respectifs traversés de manière opérationnelle par lesdits pistons (113).

3. Moule inférieur (100) selon la revendication 2, dans lequel chaque trou de mise en prise (143) est développé le long d'une direction de coulissement de la plaque (142), afin d'avoir une partie agrandie (144), et un goulot (145) raccordé à la partie agrandie (144), agencé de sorte que chaque piston (113) met en prise la partie agrandie (144) du trou de mise en prise (143) respectif lorsque la plaque (142) est dans la position de dégagement et le piston (113) lui-même met en prise le goulot (145) relatif lorsque la plaque (142) est agencée dans la position de mise en prise, afin d'empêcher sa translation verticale.

4. Moule inférieur (100) selon la revendication 3, dans lequel chaque partie de mise en prise (131) est définie par un épaulement inférieur (132) présenté par ledit piston (113) entre la plaque (112) respective et son extrémité inférieure (115), ledit épaulement inférieur (132) étant configuré pour venir en butée contre une paroi de ladite plaque (142) adjacente au goulot (145) du trou de mise en prise (143) respectif, pour empêcher le mouvement descendant lorsque la plaque (142) est agencée dans la position de mise en prise.

5. Moule inférieur (100) selon la revendication 4, dans lequel chaque piston (113) comprend un disque de butée (130) ayant ledit épaulement inférieur (132) et ayant un diamètre supérieur à la largeur dudit goulot (145), dans une direction perpendiculaire à ladite direction de coulissement, ledit disque de butée (130) étant dimensionné pour traverser ladite partie agrandie (144) pendant un mouvement dudit piston (113) entre la position levée et la position abaissée lorsque la plaque (142) est dans la position de dégagement et pour venir en butée contre la paroi de la plaque (142) adjacente au goulot (145) lorsque la plaque (142) est dans la position de mise en prise.

6. Moule inférieur (100) selon la revendication 5, dans lequel ledit disque de butée (130) a une surface inférieure évasée (133) par rapport à la direction de développement du piston (113) respectif, afin de définir une invitation à se mettre en prise avec un bord du trou de mise en prise (143) relatif de ladite plaque (142) pendant un mouvement de la plaque (142) de la position de dégagement à la position de mise en prise, le coulissement dudit bord contre ladite surface inférieure évasée (133) déterminant une levée du piston (113) relatif.

7. Moule inférieur (100) selon une ou plusieurs des revendications 3 à 6, dans lequel ledit piston (113) a une partie d'appui inférieure (114) agencée au-dessous de ladite partie de mise en prise (131) et définissant ladite extrémité inférieure (115), ladite partie d'appui (114) ayant un diamètre inférieur à la largeur du goulot (145) respectif, dans une direction perpendiculaire à ladite direction de coulissement et étant agencée afin de se mettre en prise avec ledit goulot (145) pendant un mouvement de la plaque (142) de la position de dégagement à la position de mise en prise.

8. Moule inférieur (100) selon une ou plusieurs des revendications 2 à 7, dans lequel lesdites parties de raccordement (101) comprennent des guides coulissants (101a) configurés pour se mettre en prise avec des guide coulissants (11a) respectifs de la machine de thermoscellage (1) pendant une insertion dudit moule inférieur (100) dans le siège de logement respectif, la direction de coulissement de la plaque (142) étant parallèle audits guides coulissants (101a).

9. Moule inférieur (100) selon une ou plusieurs des revendications précédentes, comprenant une pluralité d'éléments élastiques agissant entre ledit bâti (110) et lesdits pistons (113) pour comprimer lesdits pistons (113) vers le bas, lesdits éléments élastiques étant configurés pour activer un mouvement desdits pistons (113) de la position levée à la position abaissée pendant un mouvement vertical dudit bâti (110) par rapport à la machine (1).

10. Machine de thermoscellage (1) comprenant :
- une unité de transport (5) configurée pour déplacer une pluralité de récipients alimentaires (C) vers une station de scellement (S) ;
- une pluralité d'éléments de butée (8) agencés au-dessous de ladite station de scellement (S) ;
- un support inférieur (10) définissant un siège de logement, dans lequel un moule inférieur (100) selon une ou plusieurs des revendications 1 à 9 est logé, de sorte que les parties de raccordement (101) du moule inférieur (100) se mettent en prise avec des parties de support réciproques (11) présentées par ledit support inférieur (10) et de sorte que les extrémités inférieures (115) des pistons (113) viennent en butée contre lesdits éléments de butée (8) ;
- un moule supérieur (200) agencé au-dessus de la station de scellement (S) et associé au moule inférieur (100) pour permettre un thermoscellage des récipients (C) dans la station de scellement ;
- un moyen d'activation (7) agissant sur le support inférieur pour le déplacer verticalement d'une position de réception dans laquelle le moule inférieur (100) permet l'accès des récipients (C) à la station de scellement (S), à une position de scellement dans laquelle le moule inférieur (100) vient en butée contre le moule supérieur (200) pour thermosceller un ou plusieurs récipients (C) afin de déterminer un mouvement vertical réciproque entre lesdites parties de support (11) et lesdits éléments de butée (8) afin d'activer un mouvement vertical des pistons (113) du moule inférieur (100) entre la position levée et la position abaissée.
